# DEMANDE DE BREVET EUROPEEN

(11) **EP 0 915 602 A1**
(43) Date de publication de la demande: **12.05.1999**
(21) Numéro de dépôt: 98203622.0
(22) Date de dépôt: 27.10.1998
(51) Int. Cl.: H04L 29/08, G06F 9/46, H04N 7/14

(54) **Méthode de communication entre des terminaux répartis et une station centrale**

(30) Priorité: 04.11.1997 FR 9713851
(71) Demandeur: Koninklijke Philips Electronics N.V., 5621 BA Eindhoven (NL)
(72) Inventeur: Duranton, Marc, 75008 Paris (FR)
(74) Mandataire: Landousy, Christian

(57) **Abrégé**

L'invention concerne une méthode de communication entre des terminaux et un serveur central, dans laquelle ces terminaux, ayant pour fonction principale le décodage MPEG-2, sont détournés, sur demande et après autorisation, de cette fonction pour participer en parallèle à la mise en oeuvre commune d'une fonction auxiliaire sous le contrôle dudit serveur.
Application : association de décodeurs MPEG-2

## Description

La présente invention concerne une méthode de communication entre un nombre quelconque de terminaux répartis et une station centrale interconnectés par l'intermédiaire d'un canal de communication comprenant une voie descendante de communication entre ladite station et les terminaux et une voie ascendante de communication en sens inverse. Cette invention est utilisable en particulier dans toutes les situations où doivent être prévus des calculs coûteux, exigeant de très grandes puissances de calcul, comme par exemple ceux effectués en météorologie, ou dans des applications telles que le décodage du génome humain, les calculs aéronautiques, etc...

L'engouement croissant pour les réseaux de communication a conduit les chercheurs et l'industrie à développer pour les utilisateurs des applications dites multimédia. Comme les possibilités supplémentaires offertes par ces applications (interactivité et communication bidirectionnelle notamment) ne s'appuient pas sur des protocoles de communication standardisés, le groupe MPEG (Moving Pictures Expert Group) de l'ISO (International Organisation for Standardisation) s'est attaché à structurer et standardiser les procédés de codage et de synchronisation des informations transportées. Bien que ce standard, baptisé MPEG-4 et qui devrait voir le jour en 1998, soit en concurrence avec d'autres solutions, il paraît acquis que, dans tous les cas, les terminaux de décodage numériques équipant les utilisateurs vont, notamment pour pouvoir mettre en oeuvre les possibilités supplémentaires évoquées ci-dessus, être dotés de fonctions puissantes.

Un but de l'invention est de proposer une méthode de communication entre un serveur central et des terminaux répartis permettant à ces derniers d'être utilisés de façon originale par rapport à leur fonction première, en envisageant des usages plus nombreux que ceux requis pour la simple application à laquelle ils étaient initialement destinés.

L'invention concerne à cet effet une méthode de communication telle que définie dans le préambule de la description et qui est en outre caractérisée en ce que lesdits terminaux sont de type grand public, et équipés d'une commande d'activation de leur fonction principale correspondante, et en ce que ladite méthode comprend les étapes suivantes :
(A) une étape de test de réception, par l'un quelconque des terminaux, d'une requête d'activation dudit terminal, adressée par la station centrale pour commander l'activation d'une fonction auxiliaire autonome par rapport à ladite fonction principale;
(B) une étape de test de disponibilité et d'autorisation d'usage, pour transmission à ladite station des informations relatives à la disponibilité des terminaux ainsi sollicités;
(C) une étape de transmission aux terminaux disponibles de données relatives à des opérations demandées à ces terminaux par ladite station dans le cadre de ladite fonction auxiliaire;
(D) une étape d'exécution et de retour des résultats desdites opérations vers ladite station.

Le principe de cette méthode est le suivant. D'une part, ces terminaux sont (ou plutôt : seront, car les circuits de décodage sont, actuellement, câblés) équipés d'une voie de retour, c'est-à-dire d'un moyen de communication entre eux et le serveur auquel ils sont reliés, assurant ainsi l'interactivité. D'autre part, chacun des terminaux dispose (ou disposera) d'un processeur multimédia programmable puissant, les fonctions de décodage, d'interactivité, etc..., étant assurées par un logiciel fonctionnant sur le processeur. Enfin, chaque terminal peut être identifié (l'existence d'un moyen d'identification est indispensable pour assurer par exemple le décryptage dans les cas de transmission codée ou payante). Toutes ces fonctions permettent, lorsqu'un termina n'est pas employé pour sa fonction principale et que son utilisateur habituel n'interdit pas cette nouvelle activité, de l'employer alternativement pour réaliser des fonctions diverses et notamment de calcul. La puissance de calcul ainsi récoltée peut être très impressionnante pour un coût minime, à condition que les opérations ou calculs à mettre en oeuvre se prêtent bien à un découpage modulaire en de petites unités pouvant être traitées indépendamment les unes des autres.

Il a déjà été proposé de remplacer un codeur de type MPEG-2 par une association de stations de travail en parallèle assurant une mise en oeuvre coordonnée de l'algorithme de codage MPEG-2. Le document "Software implementation of MPEG-II video encoding using socket programming in LAN", Y.Yu et al., Proceedings of the SPIE, Int. Soc.Opt. Eng. (USA), vol. 2187, pp. 229-240, décrit une telle solution. Dans cette application, la fonction principale exercée par les stations oeuvrant en parallèle reste cependant celle qui était prévue à l'origine, et les moyens de codage décrits ne font qu'assurer sous une forme qui peut être qualifiée d'équivalente l'exécution de la même fonction principale, à l'opposé de ce qui est prévu dans le cas de l'invention.

Dans un mode particulier de réalisation, le protocole de communication ainsi défini prévoit des moyens pour la réponse individuelle de chaque terminal à la requête que le serveur lui envoie. La méthode selon l'invention est à cet effet caractérisée en ce que l'étape (B) comprend un premier test d'activité du ou des terminaux qui ont reçu une requête d'activation, un deuxième test d'autorisation de prêt dudit terminal pour une autre activité, et une opération de réponse à la station centrale dans une fenêtre temporelle spécifique de ce termina, pour indiquer à ladite station son état de disponibilité.

Lorsque ce mode de réalisation est prévu, ladite méthode est alors de préférence caractérisée en ce que l'opération d'adressage de chaque terminal par la station centrale est réalisée à l'aide d'un code d'identification de ce termina, et en ce que la position spécifique de ladite fenêtre temporelle est définie par ledit code d'identification.

Quelle que soit la réalisation proposée, il est en tout cas particulièrement intéressant que la station centrale transmette à chaque termina disponible les données de l'application à mettre en oeuvre, en un langage indépendant du type de termina concerné.

En outre, comme dans le cas du mode de réalisation cité ci-dessus, il est avantageux que, dans la mise en oeuvre de la méthode, l'étape (D) soit également effectuée dans une fenêtre temporelle spécifique de chacun des terminaux qui se sont rendus disponibles.

Enfin, selon une variante perfectionnée de mise en oeuvre de la méthode, celle-ci peut comprendre également, en cas d'activation de la fonction principale d'un terminal, une étape de mémorisation de l'état courant dans lequel se trouve ledit termina concerné par le déroulement des étapes (A) à (D) lorsque la fonction auxiliaire a été activée.

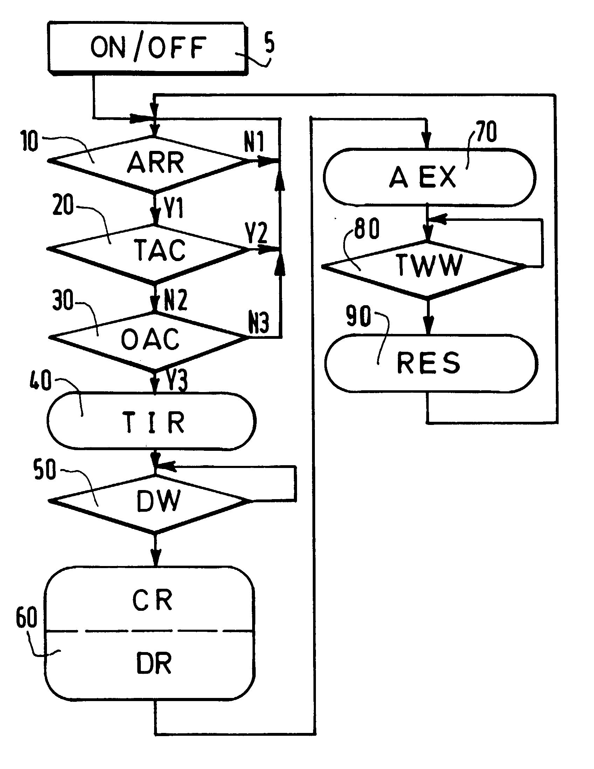

Les particularités et avantages de l'invention apparaîtront maintenant de façon plus détaillée dans la description qui suit et dans le dessin annexé (figure 1) qui montre un organigramme présentant les principales étapes de la mise en oeuvre de la méthode de communication dans chacun des terminaux considérés.

Le principe de l'invention, qui est en quelque sorte d'employer, en la détournant de son utilisation première, la puissance opérationnelle, et notamment de calcul, disponible dans des terminaux répartis dans le public (ici des décodeurs vidéo encore appelés "set-top boxes") pour constituer une vaste réserve utilisable pour de très grands projets, est en effet illustré sur la figure 1. L'organigramme ainsi représenté montre les diverses étapes de la méthode de communication mise en oeuvre dans chacun desdits terminaux, en liaison avec un serveur central. L'étape 5 désigne la mise en route préalable ("ON/OFF"), par l'utilisateur, du terminal de décodage T(i) considéré, i pouvant atteindre des valeurs très élevées (un million, par exemple, sans qu'il s'agisse là d'une limite, bien entendu). Le terminal étant allumé, la réception éventuelle d'un code d'activation, demandant à ce termina de se mettre à la disposition du serveur central pour exécuter une fonction (auxiliaire) autre que sa fonction de décodeur (dans le cas présent, sa fonction principale), constitue une première étape 10 (test ARR de réception d'une requête d'activation).

A la réception de ce code d'activation (réponse Y1, l'absence de reception correspondant au contraire à la réponse N1), le terminal concerné peut avoir plusieurs comportements :
(a) soit il est en train d'exécuter sa fonction principale de décodage numérique (réponse Y2) : dans ce cas, la requête envoyée par le serveur est ignorée ou au moins mise en suspens, dans l'attente d'un retour du termina à l'état de disponibilité;
(b) soit il est en attente (réponse N2), et l'utilisateur ne s'en sert pas mais n'autorise personne d'autre à le faire (réponse N3)
(c) le termina étant en attente (N2), l'utilisateur autorise son usage (réponse Y3) pour d'autres tâches que l'exécution de sa fonction principale.

Le choix entre (a) et (b) correspond à la deuxième étape 20 : c'est le test TAC d'activité du terminal, auquel la réponse est soit Y2 (situation (a) ci-dessus), soit N2 (situation (b) dite d'attente). Le choix entre (b) et (c) correspond à la troisième étape 30 : c'est le test OAC d'autorisation, ou non, de prêt du terminal pour une autre activité, auquel la réponse est soit N3 (situation indiquée ci-dessus en (b) : pas d'autorisation), soit Y3 (situation (c) ci-dessus : autorisation accordée).

Lorsque l'utilisateur habituel a accordé l'autorisation d'usage de son terminal, les étapes suivantes de la mise en oeuvre de la méthode obéissent alors aux principes suivants.

Une étape primordiale est, tout d'abord, de disposer d'un mode d'adressage précis des terminaux : on utilise à cet effet une caractéristique spécifique du décodeur (par exemple une fonction du code d'accès du décodeur, ou bien le numéro de série de ce décodeur, ou encore le numéro ou une fonction du numéro de la ligne téléphonique, lorsque la voie de retour se fait par liaison téléphonique et modem), qui devra alors, en général, être intégrée dans une mémoire morte. Avec, comme exemple, un numéro d'identification de quatre symboles (XYZT, en base 10 pour la suite de la description, pour simplifier l'exposé de l'invention), il est possible d'adresser 10000 décodeurs différents.

Il est possible, aussi, de moduler cet adressage, par exemple de distribuer un code d'adressage par groupe de 100, tel que : xyZT où x et y sont des chiffres fixés mais Z et T, les deux autres symboles, ont une valeur quelconque, indifférente.

A la réception du code d'identification (par exemple du code ci-dessus : xyZT), tous les décodeurs ayant dans le même ordre x et y pour les deux premiers chiffres savent qu'ils sont concernés par le message qui va suivre ce code d'identification. Ce message suivant sera en général la requête demandant si le décodeur est disponible ou non, et d'usage autorisé ou non (étapes 20 et 30 respectivement). Le décodeur adresse alors sa réponse au serveur dans une fenêtre temporelle bien déterminée (opération référencée TIR sur la figure 1, et correspondant à l'étape 40). Cette fenêtre dépend par exemple des deux derniers chiffres Z et T non utilisés dans le code d'identification : si ce code est 42ZT, le décodeur n° 4210 répond 10 secondes après la réception dudit code envoyé par le serveur, le décodeur n° 4237 répond 37 secondes après, et ainsi de suite (l'unité de temps ici choisie, la seconde, n'étant qu'un exemple non limitatif). Cet étalement des réponses des décodeurs dans le temps permet d'éviter la surcharge de la voie de retour vers le serveur.

A partir des réponses des décodeurs libres, le serveur peut établir sa liste de charge : si deux décodeurs seulement sont disponibles dans le groupe 42ZT et 98 dans le groupe 67ZT, le serveur enverra le même programme à ces groupes 42ZT et 67ZT. Les décodeurs qui ont répondu positivement une première fois à la requête gardent en mémoire la nature de cette réponse, pour être ensuite les seuls à répondre (étape 50) aux demandes ultérieures du serveur concernant ce groupe (jusqu'à ce que le serveur envoie un signal de remise à zéro mettant fin à l'action en cours). Cette dernière caractéristique est utile pour éviter que des décodeurs ne "prennent le train en marche" et ne répondent à des demandes suivantes du serveur tout en n'ayant pas répondu à la demande initiale de disponibilité.

Lorsque chaque décodeur concerné a retourné au serveur (étape 40) l'information relative à sa disponibilité et s'est placé (étape 50, ou DW) en attente de données (avec 4210 comme clé dans le cas illustré), le serveur envoie (étape 60, comprenant une sous-étape CR de chargement du code d'identification et une sous-étape DR de chargement des données à traiter) les données de l'application à mettre en oeuvre, avec, grâce au code d'identification, une ou plusieurs sélections de groupes de décodeurs. Pour que l'invention fonctionne indépendamment de l'architecture matérielle du décodeur, le code et les données envoyés par le serveur peuvent être en un langage effectivement indépendant du matériel lui-même, par exemple en bytecode Java. Seuls les décodeurs appartenant au(x) groupe(s) sélectionné(s) exécutent l'application (étape 70, ou AEX).

Une fois les opérations demandées effectuées, chaque décodeur renvoie leurs résultats au serveur (étape 90, ou RES), précédés du numéro d'identification dudit décodeur, et dans un ordre de retour des réponses qui dépend de ce numéro d'identification. L'existence de cet ordre signifie qu'en fait chaque décodeur va, là encore, pour transmettre sa propre réponse, attendre (étape 80, ou TWW) de disposer d'une fenêtre temporelle d'émission de cette réponse, cette fenêtre étant liée au code spécifique du décodeur (4210 dans l'exemple décrit et illustré).

Bien entendu, la présente invention n'est pas limitée au mode de mise en oeuvre décrit, à partir duquel des variantes peuvent être proposées.

Par exemple, dans le cas où un groupe de décodeurs est, numériquement, faiblement représenté (il ne contient qu'un décodeur, ou un tout petit nombre de décodeurs) et que le serveur prévoit d'effectuer de nombreuses transactions avec ce groupe, il peut être avantageux de modifier temporairement le numéro de ces quelques décodeurs concernés. Dans ce cas, le serveur envoie un nouveau numéro au décodeur ou au groupe de décodeurs, ce numéro étant alors précédé d'un repère tel qu'un bit de signalisation (appelé par exemple "alternate" dans tous les messages suivants). Si un message est émis par le serveur avec ce bit "alternate", les décodeurs ayant conservé leur vrai numéro répondent par exemple en premier, puis laissent le temps aux décodeurs "alternate" de répondre également. Cette numérotation temporaire peut être effacée par un message de remise à zéro précédé du code provisoire qui avait été affecté à ce groupe de décodeurs concerné.

D'autre part, on a vu que l'étape référencée 5 désignait la mise en route du décodeur. Le décodeur est en effet, par défaut, en veille, c'est-à-dire dans un état d'attente soit de l'activation de sa fonction principale par l'utilisateur, soit de son utilisation par le serveur central. Il est cependant manifeste que l'étape de mise en route peut aussi intervenir à n'importe quelle étape du processus représenté sur la figure 1 (l'utilisateur peut activer le décodeur pour sa fonction principale à un moment où il est déjà sollicité par le serveur). Dans ce cas, deux situations sont possibles :
(a) le décodeur en est au moins à l'étape 70 (exécution de l'application demandée par le serveur) et possède assez de ressources internes pour garder en mémoire l'état exact dans lequel il se trouve (dans le cours des opérations demandées par le serveur) : il sauve alors son état courant, pour le reprendre ultérieurement lorsque l'utilisateur aura mis fin à l'exécution de la fonction principale du décodeur;
(b) le décodeur n'en est pas encore à l'étape 70 ou, bien que l'ayant au moins atteinte, ne possède pas assez de ressources pour sauver son état courant : il va alors, lorsque l'utilisateur intervient, retomber dans l'état précédant juste l'étape 10, sans avoir donné de réponse au serveur.

Par ailleurs, il est manifeste que le retour des résultats d'un décodeur vers le serveur peut être terminé en un passage, ou au contraire exiger plusieurs tours, sans pour autant que cette deuxième solution sorte du cadre de l'invention.

## Revendications

1. Méthode de communication entre un nombre quelconque de terminaux répartis et une station centrale interconnectés par l'intermédiaire d'un canal de communication comprenant une voie descendante de communication entre ladite station et les terminaux et une voie ascendante de communication en sens inverse, caractérisée en ce que lesdits terminaux sont de type grand public et équipés d'une commande d'activation de leur fonction principale correspondante, et en ce que ladite méthode comprend les étapes suivantes :
(A) une étape de test de réception, par l'un quelconque des terminaux, d'une requête d'activation dudit termina, adressée par la station centrale pour commander l'activation d'une fonction auxiliaire autonome par rapport à ladite fonction principale;
(B) une étape de test de disponibilité et d'autorisation d'usage, pour transmission à ladite station des informations relatives à la disponibilité des terminaux ainsi sollicités;
(C) une étape de transmission aux terminaux disponibles de données relatives à des opérations demandées à ces terminaux par ladite station dans le cadre de ladite fonction auxiliaire;
(D) une étape d'exécution et de retour des résultats des opérations exécutées vers ladite station.

2. Méthode selon la revendication 1, caractérisée en ce que l'étape (B) comprend un premier test d'activité du ou des terminaux qui ont reçu une requête d'activation, un deuxième test d'autorisation de prêt dudit termina pour une autre activité, et une opération de réponse à la station centrale dans une fenêtre temporelle spécifique de ce terminal, pour indiquer à ladite station son état de disponibilité.

3. Méthode selon la revendication 2, caractérisée en ce que l'opération d'adressage de chaque termina par la station centrale est réalisée à l'aide d'un code d'identification de ce terminal, et en ce que la position spécifique de ladite fenêtre temporelle est définie par ledit code d'identification.

4. Méthode selon l'une des revendications 2 et 3, caractérisée en ce que la station centrale transmet à chaque terminal disponible les données de l'application à mettre en oeuvre, en un langage indépendant du type de terminal concerné.

5. Méthode selon l'une des revendications 2 à 4, caractérisée en ce que l'étape (D) est également effectuée dans une fenêtre temporelle spécifique de chacun des terminaux qui se sont rendus disponibles.

6. Méthode selon l'une des revendications 1 à 5, caractérisée en ce qu'elle comprend également, en cas d'activation de la fonction principale d'un termina, une étape de mémorisation de l'état courant dans lequel se trouve ledit termina concerné par le déroulement des étapes (A) à (D) lorsque la fonction auxiliaire a été activée.

7. Méthode selon l'une des revendications 1 à 6, caractérisée en ce que lesdits terminaux de type grand public sont des décodeurs vidéo de type MPEG.
